# EUROPÄISCHE PATENTANMELDUNG

(11) **EP 1 870 982 A2**
(43) Veröffentlichungstag der Anmeldung: **26.12.2007**
(21) Anmeldenummer: 07010767.7
(22) Anmeldetag: 31.05.2007
(51) Int. Cl.: H02K 1/04

(54) **Elektromotor**

(30) Priorität: 22.06.2006 DE 102006028558
(71) Anmelder: LuK Lamellen und Kupplungsbau Beteiligungs KG, 77815 Bühl (DE)
(72) Erfinder: Hill, Wolfgang, 76135 Karlsruhe (DE)

(57) **Zusammenfassung**

Ein Elektromotor hat ein Primärteil und ein relativ dazu bewegbares Sekundärteil. Das Primärteil weist mehrere in Bewegungsrichtung der Relativbewegung zueinander versetzte Polbaugruppen auf, die jeweils einen weichmagnetischen C-Kern und eine elektrische Wicklung haben, welche magnetisch mit dem Sekundärteil zusammenwirken. Der Elektromotor hat ein Stanzgitter, das mehrere voneinander beabstandete, durch einen elektrischen Isolator miteinander verbundene Stanzgitterteile aufweist. Die Stanzgitterteile haben mit Enden der Wicklungen verbundene Anschlussstellen und davon beabstandete Anschlusskontakte, die mit einer Ansteuereinrichtung für die Wicklungen verbindbar sind. Die Stanzgitterteile weisen Wärmeableitflächen auf, die den C-Kernen zugewandt und jeweils über eine dünne elektrische Isolationsschicht flächig wärmeleitend mit diesen verbunden sind.

## Beschreibung

Die Erfindung betrifft einen Elektromotor mit einem Primärteil und einem relativ dazu bewegbaren Sekundärteil, wobei das Primärteil mehrere in Bewegungsrichtung der Relativbewegung zueinander versetzte Polbaugruppen aufweist, die jeweils einen weichmagnetischen C-Kern und eine elektrische Wicklung aufweisen, die magnetisch mit dem Sekundärteil zusammenwirken.

Ein derartiger Elektromotor mit einem als Rotor ausgebildeten Sekundärteil ist aus der Praxis bekannt. Bei der Herstellung des Elektromotors werden zunächst die einzelnen Polbaugruppen gefertigt, indem die C-Kerne bereitgestellt und mit Spulendraht bewickelt werden. Danach werden die Polbaugruppen mittels einer Halterung in Drehrichtung des Rotors zueinander versetzt in konzentrischen Abständen zur Rotationsachse des Rotors positioniert und relativ zueinander fixiert. An dem so erhaltenen Primärteil wird der Rotor derart drehbar gelagert, dass er in einen zwischen den Enden der C-Kerne gebildeten Luftspalt eingreift. Über den Luftspalt wirkt ein mittels des Primärteils erzeugtes magnetisches Drehfeld zur Erzeugung der Drehbewegung des Rotors mit diesem zusammen. Der Elektromotor ermöglicht zwar eine kostengünstige Serienfertigung der getrennt voneinander hergestellten Polbaugruppen, hat jedoch den Nachteil, dass die einzelnen Polbaugruppen danach relativ zueinander positioniert und fixiert werden müssen. Außerdem müssen die Enden der Wicklungen der einzelnen Polbaugruppen miteinander verschaltet und mit Anschlusskontakten verbunden werden, an denen eine Ansteuereinrichtung für die Wicklungen anschließbar ist. Ein weiterer Nachteil des Elektromotors besteht darin, dass die beim Bestromen der Wicklung an den Anschlusskontakten auftretende Verlustwärme nur schlecht abgeführt werden kann. Die Anschlusskontakte müssen deshalb entsprechend groß dimensioniert werden.

Es besteht deshalb die Aufgabe, einen Elektromotor der eingangs genannten Art zu schaffen, der einfach und kostengünstig herstellbar ist und kompakte Abmessungen ermöglicht.

Diese Aufgabe wird gelöst durch einen Elektromotor mit einem Primärteil und einem relativ dazu bewegbaren Sekundärteil, wobei das Primärteil mehrere in Bewegungsrichtung der Relativbewegung zueinander versetzte Polbaugruppen aufweist, die jeweils einen weichmagnetischen C-Kern und eine elektrische Wicklung aufweisen, die magnetisch mit dem Sekundärteil zusammenwirken, mit einem Stanzgitter, das mehrere voneinander beabstandete, durch einen elektrischen Isolator miteinander verbundene Stanzgitterteile aufweist, die mit Enden der Wicklungen verbundene Anschlussstellen und davon beabstandete Anschlusskontakte zum Verbinden mit einer Ansteuereinrichtung für die Wicklungen aufweisen, und wobei die Stanzgitterteile Wärmeableitflächen aufweisen, die den C-Kernen zugewandt und jeweils über eine dünne elektrische Isolationsschicht flächig wärmeleitend mit diesen verbunden sind.

In vorteilhafter Weise kann die beim Bestromen der Wicklung in den Stanzgitterteilen und insbesondere an den Anschlusskontakten auftretende Verlustwärme über die flächig wärmeleitend mit den C-Kernen verbundenen Stanzgitterteile gut an die C-Kerne und ggf. von dort weiter an eine Wärmesenke, wie z.B. ein Motorgehäuse und/oder einen Kühlkörper, abgeleitet werden. Die Anschlusskontakte können dadurch entsprechend kompakte Abmessungen aufweisen. Das Stanzgitter erfüllt also eine Doppelfunktion und dient sowohl zum Verschalten der Wicklungen mit den Anschlusskontakten als auch zum Abführen der an den Stanzgitterteilen auftretenden Verlustwärme. Die zwischen den Wärmeableitflächen und den C-Kernen angeordnete Isolationsschicht kann ein Schichtstoff-Träger oder ein Kunststoffformkörper mit einer Boden- und einer Deckelplatte sein, zwischen welche die Stanzgitterteile eingelegt sind. Die Dicke der Isolationsschicht beträgt vorzugsweise etwa 2/10 bis 3/10 mm.

Bei einer vorteilhaften Ausgestaltung der Erfindung sind die Wärmeableitflächen an Randbereichen der Stanzgitterteile vorgesehen, wobei die Randbereiche mit ihrer Erstreckungsebene quer zur Haupterstreckungsebene des Stanzgitters angeordnet und insbesondere gegenüber dieser abgewinkelt sind. Bei der Herstellung des Stanzgitters können dann die Bereiche des Stanzgitters, die bei einem herkömmlichen Stanzgitter ausgestanzt würden, umgebogen bzw. abgekantet werden, um eine flächige Verbindung des Stanzgitters mit den C-Kernen zu erreichen. Die Wärmeableitflächen sind dabei bevorzugt jeweils etwa parallel zu einem ihnen zugewandten Oberflächenbereich des ihnen zugeordneten C-Kerns angeordnet.

Die vorstehend genannte Aufgabe wird auch durch einen Elektromotor mit einem Primärteil und einem relativ dazu bewegbaren Sekundärteil gelöst, bei dem das Primärteil mehrere in Bewegungsrichtung der Relativbewegung zueinander versetzte Polbaugruppen aufweist, die jeweils einen weichmagnetischen C-Kern und eine elektrische Wicklung aufweisen, die magnetisch mit dem Sekundärteil zusammenwirken, mit einem Stanzgitter, das mehrere voneinander beabstandete, durch einen elektrischen Isolator miteinander verbundene Stanzgitterteile aufweist, die mit Enden der Wicklungen verbundene Anschlussstellen und davon beabstandete Anschlusskontakte zum Verbinden mit einer Ansteuereinrichtung für die Wicklungen aufweisen, und wobei die Stanzgitterteile derart an einander abgewandten Seitenflächen der einzelnen C-Kerne angeordnet und jeweils über eine dünne elektrische Isolationsschicht mit diesen verbunden sind, dass die C-Kerne zumindest in Bewegungsrichtung der Relativbewegung zueinander fixiert sind.

Auch bei dieser Lösung erfüllt das Stanzgitter eine Doppelfunktion und dient einerseits zum Verschalten der Wicklungen mit den Anschlusskontakten und andererseits zum Fixieren der Polbaugruppen in einer vorgegeben Lage. In vorteilhafter Weise kann dadurch eine zusätzliche Halterung, welche die Polbaugruppen miteinander verbindet, eingespart werden, so dass der Elektromotor entsprechend kompakte Abmessungen ermöglicht. Außerdem vereinfacht sich die Montage des Elektromotors. Eine exakte Positionierung der Polbaugruppen ist besonders bei einem als Reluktanzmaschine ausgebildeten Elektromotor vorteilhaft.

Bei einer bevorzugten Ausgestaltung der Erfindung ist der elektrische Isolator eine Vergussmasse, in welche die Stanzgitterteile bereichsweise eingebettet sind. Die von der Vergussmasse umgrenzten Stanzgitterteile sind dann gut vor Korrosion geschützt.

Zweckmäßigerweise ist die dünne elektrische Isolationsschicht durch einen Teilbereich der Vergussmasse gebildet. Der Elektromotor kann dann noch kostengünstiger hergestellt werden.

Bei einer anderen vorteilhaften Ausgestaltung der Erfindung ist die dünne elektrische Isolationsschicht durch eine an der Oberfläche mindestens eines C-Kerns anhaftende Schicht gebildet. Dabei ist es sogar möglich, dass der C-Kern mit der Isolationsschicht umspritzt ist, wobei die Isolationsschicht vorzugsweise aus Kunststoff besteht. Die Isolationsschicht kann aber auch eine Isolierfolie sein, die auf den C-Kern aufgeklebt ist. Dabei beträgt die Dicke der Isolierfolie und der darunter befindlichen Klebstoffschicht jeweils bevorzugt zwischen 20 und 30 µm. Selbstverständlich kann die Isolationsschicht aber auch eine Lackschicht sein.

Bei einer bevorzugten Ausführungsform der Erfindung sind die über die dünne elektrische Isolationsschicht mit den C-Kernen verbundenen Stellen der Stanzgitterteile gegen eine Rückstellkraft an dem ihnen jeweils zugeordneten C-Kern anliegen und elastisch von diesem weg auslenkbar sind. Die Stanzgitterteile und die zwischen diesen und den C-Kernen angeordnete dünne elektrische Isolationsschicht wird dann in Montagestellung durch die Rückstellkraft an den C-Kern angedrückt, wodurch eine noch bessere Wärmeableitung von den Stanzgitterteile an die C-Kerne ermöglicht wird.

Zweckmäßigerweise sind die Enden der Wicklungen mit den Anschlussstellen kalt verschweißt. Das Stanzgitter kann dann einfach und kostengünstig mit den Enden der Wicklungen werden.

Für eine Kostengünstige Herstellung sind die Anschlusskontakte bevorzugt baugleich ausgeführt. In einem mehrphasigen Elektromotor mit unipolar geschalteten Strängen wird der Massekontakt allerdings um einen dem Quadrat der Phasenzahl entsprechenden Faktor thermisch stärker belastet als die Phasenkontakte. Daher wird das die Leiterbahn für den Massekontakt bildende Stanzgitterteil bevorzugt mit einer größeren Querschnittsfläche als die übrigen Stanzgitterteile und mit einer guten thermischen Anbindung an den (die) C-Kern(e) ausgeführt.

Nachfolgend ist ein Ausführungsbeispiel der Erfindung anhand der Zeichnung näher erläutert.
Es zeigen:
- Fig. 1: eine Aufsicht auf einen nach dem Reluktanzprinzip arbeitenden, segmentierten Elektromotor, der eine Kontaktbaugruppe mit einem Stanzgitter aufweist, wobei eine das Stanzgitter umgrenzende Vergussmasse nicht näher dargestellt ist,
- Fig. 2: eine Teilquerschnitt durch den Elektromotors, auf der die Kontaktbaugruppe mit den daran angeordneten Anschlusskontakten erkennbar ist,
- Fig. 3: eine Aufsicht auf ein Stanzteil, aus dem das Stanzgitter durch einen Biegevorgang geformt wird, und
- Fig. 4: eine Aufsicht auf das Stanzgitter nach dem Durchführen des Biegevorgangs.

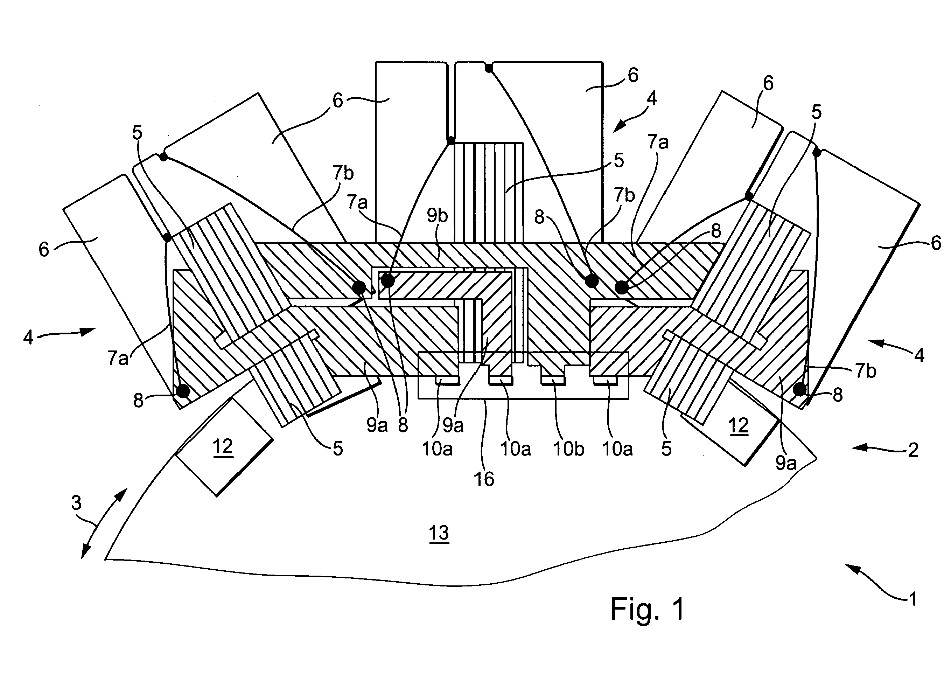

Ein in Fig. 1 im Ganzen mit 1 bezeichneter, nach dem Reluktanzprinzip arbeitender Elektromotor weist ein als Stator ausgebildetes Primärteil und ein relativ dazu verdrehbar gelagertes, als Läufer dienendes Sekundärteil 2 auf.

Das Primärteil hat mehrere in Bewegungsrichtung 3 des Sekundärteils 2 zueinander versetzte, baugleiche Polbaugruppen 4, die jeweils einen weichmagnetischen C-Kern 5 aufweisen, der zwischen seinen einander zugewandten Stirnseitenflächen einen Luftspalt bildet. Die Luftspalte sind in einer gemeinsamen Ebene nebeneinander angeordnet und seitlich voneinander beabstandet. Die Erstreckungsebenen der C-Kerne 5 sind radial zu einer Rotationsachse angeordnet, um die das Sekundärteil 2 relativ zu dem Primärteil verdrehbar ist. Wie in Fig. 1 erkennbar ist, sind die C-Kerne 5 seitlich voneinander beabstandet.

Auf den einzelnen C-Kernen 5 ist jeweils ein Spulenkörper 6 aus einem unmagnetischen, elektrisch isolierenden Werkstoff angeordnet, der der mit einer Wicklung bewickelt ist. Der Werkstoff des Spulenkörpers 6 kann ein Kunststoff sein, mit dem die C-Kerne 5 umspritzt sind.

Die Wicklung ist mit ihrer Längsachse parallel zur Rotationsachse des Sekundärteils 2 angeordnet. Es sind aber auch andere Ausführungen denkbar, bei der die Längsachse der Wicklung quer und insbesondere rechtwinklig zur Rotationsachse des Sekundärteils 2 angeordnet sein kann.

Die Enden 7a, 7b der Wicklungen sind mit Anschlussstellen 8 verbunden, die an einem Stanzgitter angeordnet sind. Das Stanzgitter hat mehrere Stanzgitterteile 9a, 9b, welche die Anschlussstellen 8 mit Anschlusskontakten 10a, 10b verbindet. Jeder Anschlusskontakt 10a, 10b ist jeweils einstückig an ein Stanzgitterteil 9a, 9b angeformt.

Wie in Fig. 1 erkennbar ist, ist jeweils einer der beiden Wicklungs-Enden 7a mit einem der betreffenden Wicklung zugeordneten Stanzgitterteil 9a und das andere Wicklungs-Ende 7b mit einem als Masse-Leiterbahn dienenden Stanzgitterteil 9b verbunden. Zur Bestromung der Wicklungen sind die Anschlusskontakte 10a, 10b mit einer in der Zeichnung nicht näher dargestellten, an sich bekannten Ansteuereinrichtung verbunden.

Die Stanzgitterteile 9a sind durch einen als Vergussmasse ausgestalteten elektrischen Isolator 11 voneinander beabstandet. Der Isolator 11 erstreckt sich durchgängig über sämtliche Stanzgitterteile 9a, 9b des Stangitters und umschließt diese bereichsweise.

Der C-Kern 5 und der Luftspalt bilden jeweils einen magnetischen Kreis, in dem der von den Wicklungen erzeugte magnetische Fluss transversal zur Bewegungsrichtung 3 des Sekundärteils 2, also in etwa radial zu dessen Rotationsachse verlaufenden Ebenen geführt ist. Das Sekundärteil 2 hat eine Anzahl von in Bewegungsrichtung 3 zueinander beabstandeten, in die Luftspalte 5 hinein und aus diesen heraus bewegbaren weichmagnetischen Kernteilen 12, deren Abmessungen in der Ebene, in der die Kernteile 12 um die Rotationsachse des Sekundärteils rotieren, etwa denen des Luftspalts entsprechen. Die Kernteile 12 sind an einem Randbereich einer nicht ferromagnetischen, um die Rotationsachse relativ zu dem Primärteil verdrehbaren Trägerscheibe 13 angeordnet. Die Kernteile 12 sind bevorzugt in den Werkstoff der Trägerscheibe 13 eingegossen oder mit diesem umspritzt. Um während des Gieß- bzw. Spritzvorgangs das Positionieren der Kernteile 12 zu erleichtern, können diese durch einen schmalen Steg einstückig miteinander verbunden sein. Die Teilung, mit der die Kernteile 12 an der Trägerscheibe 13 angeordnet sind, unterscheidet sich von der Teilung, mit der die Polbaugruppen 4 um die Rotationsachse des Sekundärteils 2 herum angeordnet sind. Der Winkel, den die Radialmittelebenen zueinander benachbarter Kernteile 13 zwischen sich einschließen unterscheidet sich also von dem Winkel, den die von zueinander benachbart nebeneinander angeordneten C-Kernen 5 aufgespannten Ebenen zwischen sich einschließen.

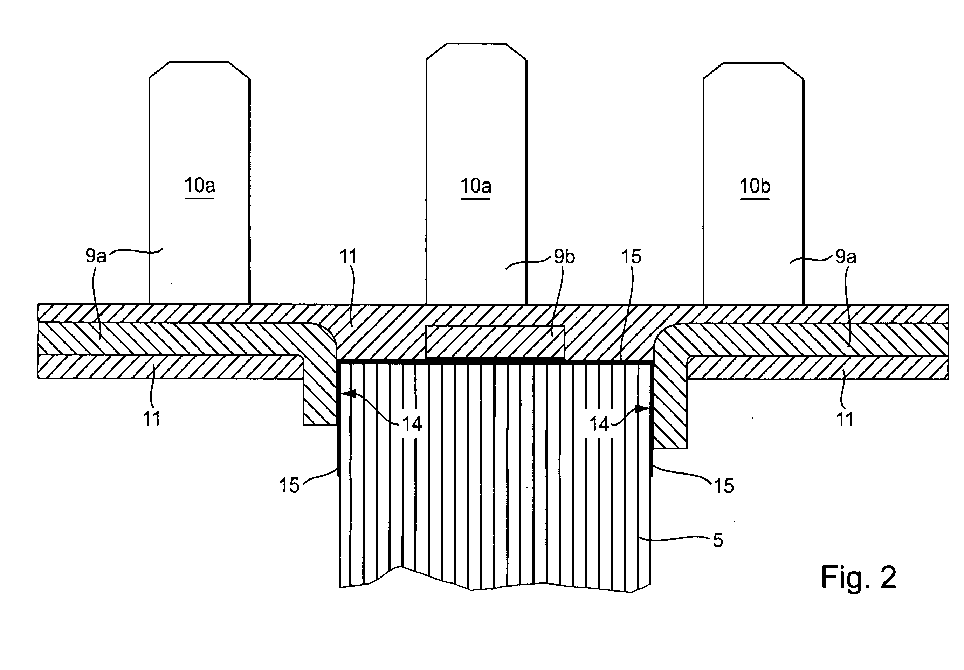

Wie in Fig. 2 besonders gut erkennbar ist, weisen die Stanzgitterteile 9a, 9b Wärmeableitflächen 14 auf, die den C-Kernen 5 zugewandt und jeweils über eine dünne elektrische Isolationsschicht 15 flächig wärmeleitend mit diesen verbunden sind. Dabei wird unter "flächig" verstanden, dass die Wärmeableitflächen 14 an der quen zu den Stirnflächen der Stanzgitterteile 9a, 9b verlaufenden Flachseiten der Stanzgitterteile 9a, 9b angeordnet sind.

Die Isolationsschichten 15 bestehen aus Kunststoff, mit dem die C-Kerne 5 umspritzt sind. Die Isolationsschichten 15 der einzelnen C-Kerne 5 sind bevorzugt einstückig mit dem dem betreffenden C-Kern 5 zugeordneten Spulenkörper 6 verbunden. Die Wandstärke der Isolationsschichten 15 ist deutlich geringer als die Wandstärke der Stanzgitterteile 9a, 9b.

Die Wärmeableitflächen 14 sind jeweils etwa parallel zu den ihnen zugeordneten Oberflächenbereichen der C-Kerne 5 angeordnet. In Fig. 2 ist erkennbar, dass die Wärmeableitflächen 14 an mehreren, einander abgewandten Seiten der einzelnen C-Kerne 5 vorgesehen sind. Mindestens zwei Wärmeableitflächen 14 schließen jeweils einen Teilbereich des C-Kerns 5 derart zwischen sich ein, dass die C-Kerne 5 und deren Wicklungen in Bewegungsrichtung 3 des Sekundärteils 2 relativ zueinander fixiert sind. In Fig. 2 ist ferner erkennbar, dass die Wärmeableitflächen 14 bevorzugt parallel oder rechtwinklig zur Haupterstreckungsebene des Stanzgitters angeordnet sind. Letzteres wird dadurch erreicht, dass die Randbereiche, an denen die Wärmeableitflächen 14 angeordnet sind, mit ihrer Erstreckungsebene gegenüber der Haupterstreckungsebene des Stanzgitters abgewinkelt sind.

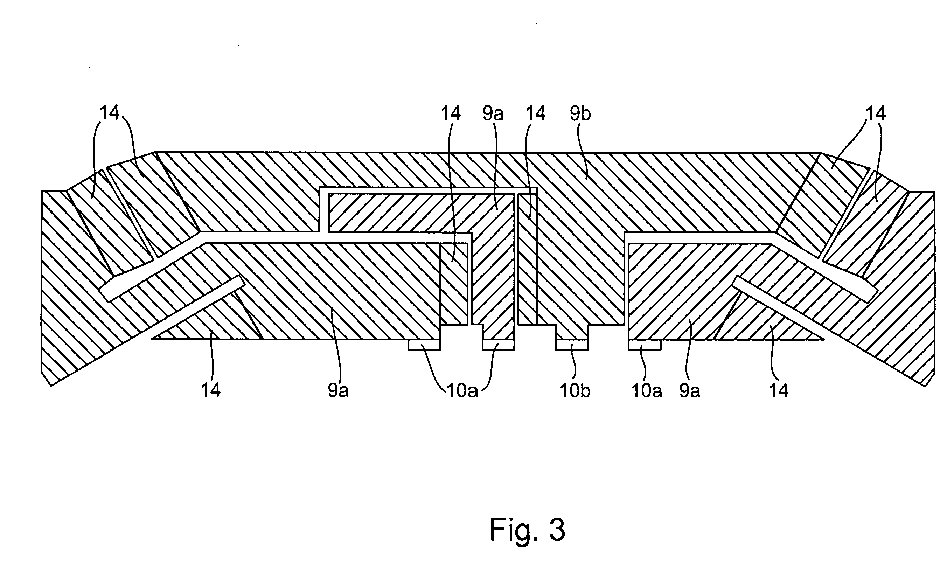

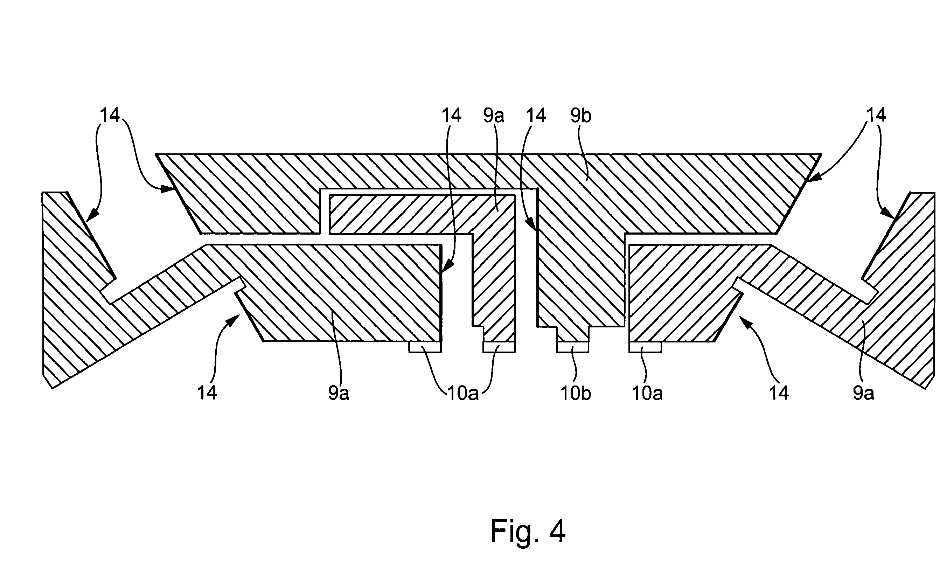

Bei der Herstellung des Stanzgitters wird zunächst aus einer Blechtafel ein Stanzteil ausgestanzt, bei dem die späteren Stanzgitterteile 9a, 9b mit Ausnahme der Anschlusskontakte 10a, 10b in einer Ebene angeordnet sind (siehe Fig. 3). Danach werden die bereits erwähnten, die Wärmeableitflächen 14 aufweisenden Randbereiche des Stanzteils mittels eines Biegevorgangs abgewinkelt. Während des Biegevorgangs werden die späteren Stanzgitterteile 9a, 9b an den Anschlusskontakten 10a, 10b eingespannt, um sie relativ zueinander zu fixieren. Dann wird das so erhaltene Stanzgitter (Fig. 4) in der Innenhöhlung eines in der Zeichnung nicht näher dargestellten Formwerkzeugs mit dem elektrischen Isolator 11 umspritzt, während die Stanzgitterteile 9a, 9b weiterhin an den Anschlusskontakten 10a, 10b fixiert werden. Nach Erstarren des Isolators 11 wird die so erhaltene, durch die Stanzgitterteile 9a, 9b und den Isolator 11 gebildete Kontaktbaugruppe an den zuvor gefertigten Polbaugruppen 4 montiert, um diese relativ zueinander zu positionieren und die Stanzgitterteile 9a, 9b wärmeleitend mit den C-Kernen 5 zu verbinden. Die Wicklungs-Enden 7a, 7b werden mit den Anschlussstellen 8 kalt verschweißt.

Erwähnt werden soll noch, dass an den Isolator 11 ein Steckergehäuse 16 einstückig angeformt ist, das die Anschlusskontakte 10a, 10b umgrenzt. Diese weisen mit ihren freien Enden von den C-Kernen 5 weg. Auf das Steckergehäuse 16 ist ein dazu passender Stecker aufsteckbar, der Gegenkontakte aufweist, welche die Anschlusskontakte 10a, 10b in Gebrauchsstellung kontaktieren.

### Bezugszeichenliste

- 1: Elektromotor
- 2: Sekundärteil
- 3: Bewegungsrichtung
- 4: Polbaugruppen
- 5: C-Kern
- 6: Spulenkörper
- 7a: Ende der Wicklung
- 7b: Ende der Wicklung
- 8: Anschlussstelle
- 9a: Stanzgitterteil
- 9b: Stanzgitterteil
- 10a: Anschlusskontakt
- 10b: Anschlusskontakt
- 11: elektrischer Isolator
- 12: Kernteil
- 13: Trägerscheibe
- 14: Wärmeableitfläche
- 15: Isolationsschicht
- 16: Steckergehäuse

## Patentansprüche

1. Elektromotor (1) mit einem Primärteil und einem relativ dazu bewegbaren Sekundärteil (2), wobei das Primärteil mehrere in Bewegungsrichtung (3) der Relativbewegung zueinander versetzte Polbaugruppen (4) aufweist, die jeweils einen weichmagnetischen C-Kern (5) und eine elektrische Wicklung aufweisen, die magnetisch mit dem Sekundärteil (2) zusammenwirken, mit einem Stanzgitter, das mehrere voneinander beabstandete, durch einen elektrischen Isolator (11) miteinander verbundene Stanzgitterteile (9a, 9b) aufweist, die mit Enden (7a, 7b) der Wicklungen verbundene Anschlussstellen (8) und davon beabstandete Anschlusskontakte (10a, 10b) zum Verbinden mit einer Ansteuereinrichtung für die Wicklungen aufweisen, und wobei die Stanzgitterteile (9a, 9b) Wärmeableitflächen (14) aufweisen, die den C-Kernen (5) zugewandt und jeweils über eine dünne elektrische Isolationsschicht (15) flächig wärmeleitend mit diesen verbunden sind.

2. Elektromotor (1) nach Anspruch 1, **dadurch gekennzeichnet, dass** die Wärmeableitflächen (14) an Randbereichen der Stanzgitterteile (9a, 9b) vorgesehen sind, und dass die Randbereiche mit ihrer Erstreckungsebene quer zur Haupterstreckungsebene des Stanzgitters angeordnet und insbesondere gegenüber dieser abgewinkelt sind.

3. Elektromotor (1) mit einem Primärteil und einem relativ dazu bewegbaren Sekundärteil (2), insbesondere nach Anspruch 1 oder 2, wobei das Primärteil mehrere in Bewegungsrichtung (3) der Relativbewegung zueinander versetzte Polbaugruppen (4) aufweist, die jeweils einen weichmagnetischen C-Kern (5) und eine elektrische Wicklung aufweisen, die magnetisch mit dem Sekundärteil (2) zusammenwirken, mit einem Stanzgitter, das mehrere voneinander beabstandete, durch einen elektrischen Isolator (11) miteinander verbundene Stanzgitterteile (9a, 9b) aufweist, die mit Enden (7a, 7b) der Wicklungen verbundene Anschlussstellen (8) und davon beabstandete Anschlusskontakte (10a, 10b) zum Verbinden mit einer Ansteuereinrichtung für die Wicklungen aufweisen, und wobei die Stanzgitterteile (9a, 9b) derart an einander abgewandten Seitenflächen der einzelnen C-Kerne (5) angeordnet und jeweils über eine dünne elektrische Isolationsschicht (15) mit diesen verbunden sind, dass die C-Kerne (5) zumindest in Bewegungsrichtung (3) der Relativbewegung zueinander fixiert sind.

4. Elektromotor (1) nach einem der Ansprüche 1 bis 3, **dadurch gekennzeichnet, dass** der elektrische Isolator (11) eine Vergussmasse ist, in welche die Stanzgitterteile (9a, 9b) bereichsweise eingebettet sind.

5. Elektromotor (1) nach einem der Ansprüche 1 bis 4, **dadurch gekennzeichnet, dass** die dünne elektrische Isolationsschicht (15) durch einen Teilbereich der Vergussmasse gebildet ist.

6. Elektromotor (1) nach einem der Ansprüche 1 bis 5, **dadurch gekennzeichnet, dass** die dünne elektrische Isolationsschicht (15) durch eine an der Oberfläche mindestens eines C-Kerns (5) anhaftende Schicht gebildet ist.

7. Elektromotor (1) nach einem der Ansprüche 1 bis 6, **dadurch gekennzeichnet, dass** die über die dünne elektrische Isolationsschicht (15) mit den C-Kernen (5) verbundenen Stellen der Stanzgitterteile (9a, 9b) gegen eine Rückstellkraft an dem ihnen jeweils zugeordneten C-Kern (5) anliegen und elastisch von diesem weg auslenkbar sind.

8. Elektromotor (1) nach einem der Ansprüche 1 bis 7, **dadurch gekennzeichnet, dass** die Enden (7a, 7b) der Wicklungen mit den Anschlussstellen (8) kalt verschweißt sind.

9. Elektromotor (1) nach einem der Ansprüche 1 bis 8, **dadurch gekennzeichnet, dass** die Anschlusskontakte (10a, 10b) baugleich ausgeführt sind.
